# EUROPEAN PATENT APPLICATION

(11) **EP 3 447 213 A1**
(43) Date of publication of application: **27.02.2019**
(21) Application number: 17186983.7
(22) Date of filing: 20.08.2017
(51) Int. Cl.: E04H 12/20, E04H 12/24

(54) **LOCKING DEVICE AND AN ATTACHMENT SYSTEM INCLUDING A LOCKING DEVICE**

(71) Applicant: LENA METALL AS, 2848 Skreia (NO)
(72) Inventor: DYSTHE, Edvard, 2849 Kapp (NO)
(74) Representative: Onsagers AS

(57) **Abstract**

A locking device (24, 43, 44, 49, 50) for attachment of an attachment member (20) to an attachment structure (12) which attachment structure comprises at least one fastening groove (14, 59, 60). The locking device (24, 43, 44, 49, 50) comprises a plate element (25) that is provided with an attachment means (28) for attachment of a fastening member (22, 57, 62, 77, 84) to the plate element (25). The locking device further comprises a locking element (29) that is secured to the plate element (25). The locking element (29) comprises a locking head (30) that comprises at least one locking edge (38) that is capable of going into locking engagement with the at least one fastening groove (14, 69, 70) when the locking head (30) is arranged in the at least one fastening groove and the fastening member is connected to the attachment member and is tensioned.

## Description

The present invention is related to a locking device for attachment of an attachment member to an attachment structure, and an attachment system comprising such a locking device.

There are many different ways of attaching a device to another structure such as a cross arm to a power pole. Often such devices are attached directly to the structure, for example using bolts, or some form of clamping device that clamps the cross bar to the power pole.

Various examples of known art showing different methods for mounting a cross bar to a power pole can for example be seen in the patent publications US 2017/063068 A1, US 6347488 B1, US 5772158 A, US 6555999 B1, WO 2007/070966 A2.

In recent years it has started to become more common to make power poles in metal instead of wood that has been very commonly used for a very long time. When power poles and pylons are made of metal, the applicant realized that new possibilities opens up that are not viable when power poles are made of wood.

An objective during development of the present invention was therefore to obtain a obtain a novel way of attaching an attachment element, such as a cross arm, a stay etc., to an attachment structure made of metal, such as a power pole, a pylon, or poles for other applications such traffic signs, etc.

It was further an objective of the present invention to obtain an attachment system that is easy to use for attaching various devices to a power pole or pylon, but that may also be used in other technical fields.

It was also an objective of the present invention to obtain an attachment system with few parts and a system that makes it is easy for a person installing the attachment system to place and attach the attachment member to the attachment structure in a correct position on the attachment structure.

A further objective of the present invention was to obtain a locking device that can be used to quickly lock the attachment member to the attachment structure.

These objectives are fulfilled with a locking device as defined in claim 1, an attachment system as defined in claim 7 and uses of the locking device as defined in claims 14 and 15. Further embodiments of the locking device and the attachment system are defined in the dependent claims 2-6 and 8-13.

There is provided a locking device for attachment of an attachment member to an attachment structure, where the attachment structure comprises at least one fastening groove. The locking device comprises a plate element that is provided with an attachment means for attachment of a fastening member to the plate element, and the locking device further comprises a locking element that is secured to the plate element. The locking element comprises a locking head that comprises at least one locking edge that is capable of going into locking engagement with the at least one fastening groove when the locking head is arranged in the at least one fastening groove and the fastening member is connected to the attachment member and is tensioned.

The plate element preferably comprises a first end portion to which the locking element is secured and a second end portion to which the fastening member is attached.

The locking head of the locking element preferably, but not necessarily, has a rectangular shape in a cross section taken in a plane that is parallel to the plate element. Furthermore, the locking head of the locking element preferably, but not necessarily, comprises four locking edges.

The locking element is preferably shaped with a neck part and a locking head where the neck part is secured to the plate element.

Furthermore, a longitudinal direction A of the locking head is arranged at an angle to the longitudinal direction B of the plate element that is between 0° and 90°.

Furthermore, the locking head is preferably arranged on the plate element such that the plate element is rotated and the locking head engages the fastening groove when the fastening member is set under tension.

The attachment means for attachment of the fastening member to the plate element may be a bolt hole, but can also be any other suitable attachment means that is capable of attaching the fastening member to the plate element.

There is also provided an attachment system comprising an attachment member, a fastening member that is connected to the attachment member and an attachment structure that is provided with at least one fastening groove. The attachment system further comprises a locking device as described above where the locking head is arranged in the at least one fastening groove. The fastening member is further connected to the locking device and tensioned such that the locking device is rotated and the at least one locking edge is brought into locking engagement with the fastening groove.

The fastening groove of the attachment structure is preferably generally T-shaped and comprises an interior part and an opening part that extends from the interior part and opens into the surroundings of the attachment structure.

Preferably, a length of the locking head is longer than the a width of an interior part of the fastening groove. Furthermore, a height of the locking head is preferably smaller than the depth of the fastening groove. Further, a width of the locking head is smaller than a width of the opening part of the fastening groove.

The interior part of the fastening groove preferably comprises two side walls and the at least one locking edge of the locking head is preferably brought into locking engagement with one of the two side walls.

The fastening groove is preferably integral with the attachment structure, but may alternatively be formed as a separate device that is mounted on the attachment structure.

The attachment structure further preferably comprises a plurality of fastening grooves.

The attachment structure may be an extruded structure comprising a plurality of fastening grooves. Furthermore, the attachment structure may be made of a metal such as steel or an aluminium alloy.

In an embodiment of the present invention, a separate fastening device, comprising the at least one fastening groove, is attached to the attachment structure.

The attachment member may, in an embodiment of the present invention, comprise an attachment plate comprising at least one attachment device for attachment of an external element. The external element may be a stay, a wire or any other object that can be attached to the attachment structure.

The attachment member may, in another embodiment of the present invention, comprise a cross arm for attachment of at least one high voltage wire.

A use of a locking device as described above, would be for attachment of a cross arm to a power pole or pylon is also provided, especially the use of a locking member as described above for a high-voltage power poles or pylons.

Another use of a locking device as described above for attachment of a stay and/or a wire and/or a bracing to one or more poles, power poles or power pylon members is also provided, especially for a high-voltage power poles or pylons.

The locking device may also be used for other purposes than attaching various devices to power poles or pylons. For example the locking device and the attachment system may be used in connection with fences, traffic signs, building structures, work platforms on walls etc.

Other features and advantages of the invention will appear from the following description of preferred embodiments of the invention, with reference to the figures where:
Figure 1 illustrates an example of a use of the present invention where a power pylon comprising a cross arm that is attached to the power pylon with locking devices according to the present invention.
Figure 2 shows an illustration of a locking device according to the present invention, in a perspective view.
Figure 3 illustrates the locking device in figure 2 in a side view.
Figure 4 illustrates the locking device in figures 2-3 as seen from below.
Figure 5 illustrates the locking device in figure 2 in a top view.
Figure 6 shows a first embodiment of an attachment system in exploded view illustrating the attachment of an attachment plate to an attachment structure with fastening grooves by using two locking devices according to the present invention.
Figure 7 illustrates a view of the attachment system shown in figure 6 where the attachment plate is attached to the attachment structure.
Figure 8 illustrates a section in a horizontal plane through a second embodiment of the attachment system where a cross bar is attached to an attachment structure using two locking devices according to the present invention.
Figure 9 illustrates a side view of the attachment system shown in figure 6.

The different embodiments shown in the figures, are to large degree similar and the same reference numbers have been used for the same technical features throughout the following description of the figures.

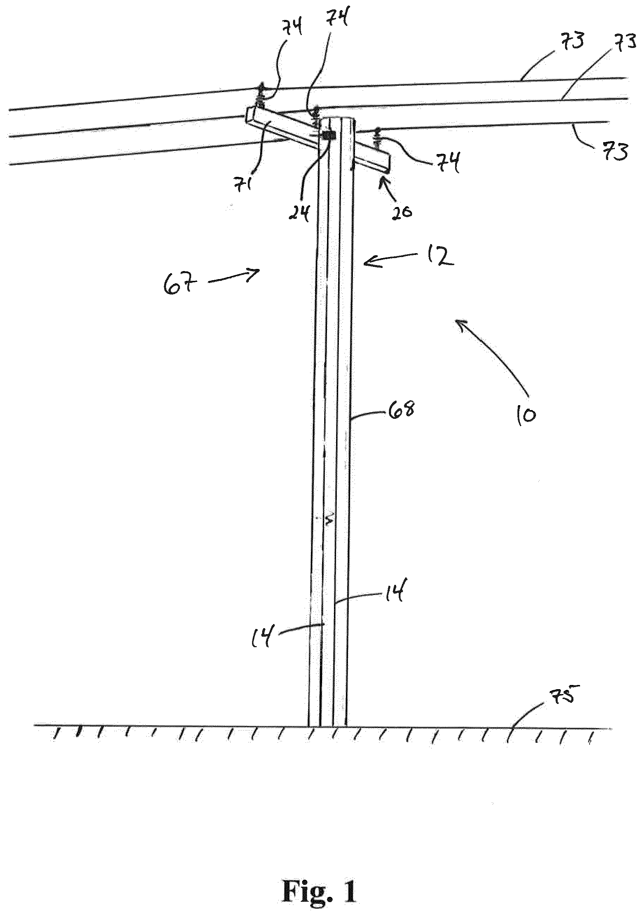

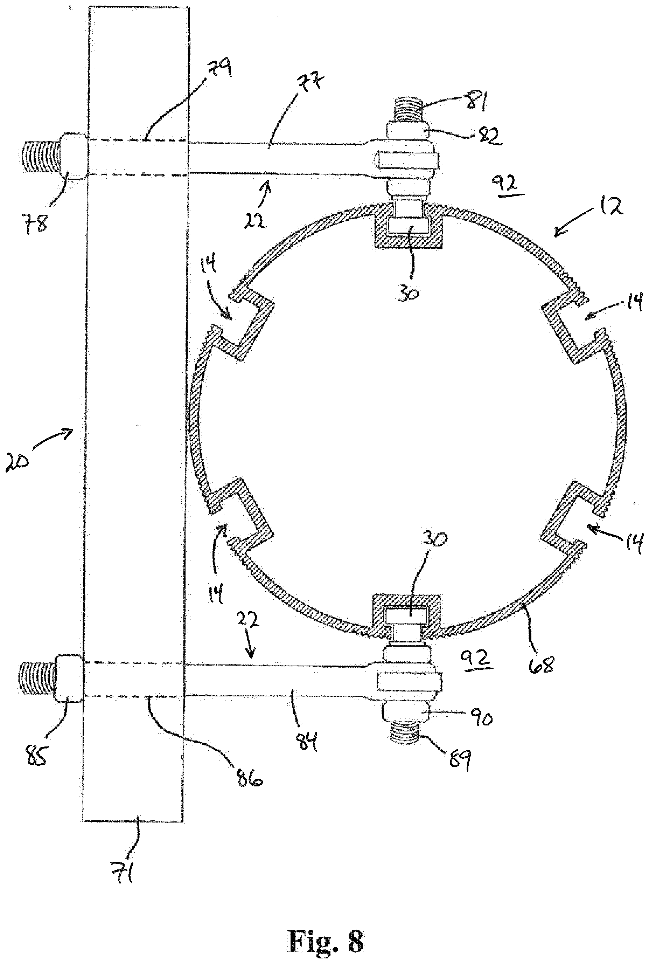

In figure 1 there is shown an example of an attachment system 10 comprising an attachment structure 12 in the form of a power pylon 67 that is mounted to the ground 75, and an attachment member 22 in the form of a cross arm 71. The power pylon 67 comprises a power pole 68 to which the cross bar 71 is attached with fastening members 22 (see figure 8) and a locking devices 24 that are arranged in fastening grooves 14. The fastening grooves 14 extends preferably, but not necessarily, along essentially the entire longitudinal length of the pole 68 as indicated in figure 1. Wires 73, carrying an electric current, are connected to wire attachment devices 74 on the cross arm 71 in a way that is well known to a person skilled in the art.

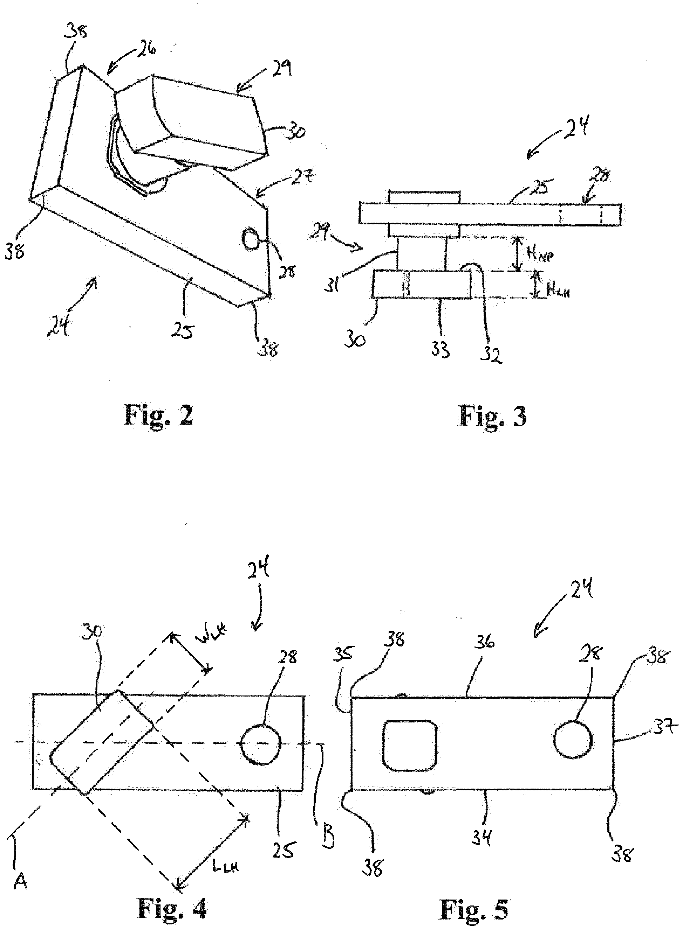

In figures 2-5, a locking device 24 according to the present invention, is shown in detail. The locking device 24 comprises a plate element 25 with a first end portion 26 and a second end portion 27. A Locking element 29 is secured to the plate element 25, preferably at the first end portion 26. The plate element 25 is further provided with attachment means 28 for attachment of the fastening member 22 to the plate element 25. The attachment means 28 are preferably arranged in the second end portion of the plate element 25. As shown in the figures, the attachment means 28 may be in the form of a bolt hole through which a bolt or similar can be passed in order to attach the fastening member 22 to the plate element 25. It should be noted that the attachment means 28 may be any suitable means that can be used to connect fastening member 22 to the plate element 25.

The locking element 29 comprises a neck part 31 and a locking head 30. The locking element 29 is preferably, but not necessarily, made in single piece in a suitable mechanical process. Since the locking element 29 will have to transfer loads on the attachment member 20, such as wind, weight of the attachment member etc., to the attachment structure 12, the locking device 24 may be made of a metal such as steel, or any other material that is capable of take and transfer relatively large forces. The neck part 31 is secured to the plate element 25 as indicated in the figures.

The locking head 30 comprises a first surface 32 facing the plate element 25. On the opposite side of the locking head 30, the locking head 30 comprises a second surface 33. The first surface 32 and second 33 are preferably, but not necessarily, substantially rectangular and preferably of the same size.

Between the first surface 32 and the second surface 33, the locking head 30 is provided with a first side surface 34, a second side surface 35, a third side surface 36 and a fourth side surface 37 such that the locking head 30 is provided with a substantially box shape. The box-shaped locking element 30 is thereby provided with four edges that connects respective two side surfaces 34, 35, 36, 37. One or more of the four edges will act as a locking edge 38 when the attachment member 22 is attached to the attachment structure 12. These locking edges 38 may be rounded to a desired degree to obtain a desired strength of the engagement of the locking edge 38 with the fastening groove 14 when the attachment member 22 is attached to the attachment structure 12.

The neck part 31 extends from the first surface 32 and into an opening in the plate element 25 (not shown in the figures) where the neck part 31 is securely fastened to the plate element 25.

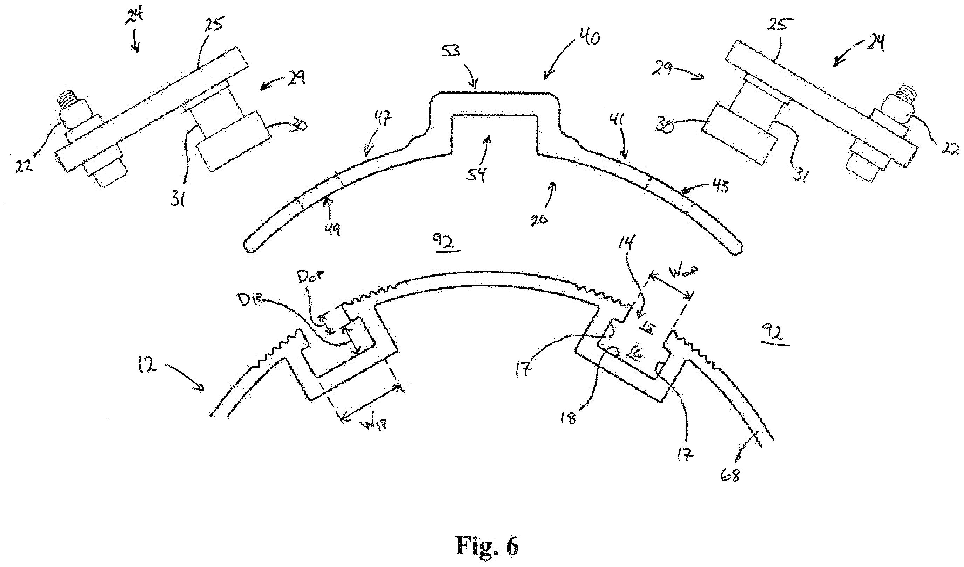

Referring to figures 2-6, the cooperation between the locking element 29 of the locking device 24 and the fastening groove can be explained. As shown in figure 6, the fastening groove 14 is provided with a generally T-shape. The T-shaped fastening groove 14 comprises an interior part 16 with two sidewalls 17 and a rear wall 18. An opening part 15 that extends in substantially the entire length of the fastening groove 14, connects the interior part 16 of the fastening groove 14 with the surroundings 92 of the attachment structure 12 so that the locking head 30 of the locking element 29 may be entered into the interior part 16 of the fastening groove 14.

As can be seen in figures 3-4, the locking head 30 has a length L_{LH}, a width W_{LH} and a height H_{LH}, while the neck part 31 has a height H_{NP}. Further, as can be seen in figure 6, the interior part 16 of the fastening groove 14 has a D_{IP} and a width W_{IP}, while the opening part 15 has a depth D_{OP} and a width W_{OP}.

The locking head 30 and the fastening groove 14 are cooperatively designed to enable at least one of the locking edges 38 of the locking head 30 to be brought into locking engagement with at least one of the side walls 17 of the interior part 16 of the fastening groove 14. Therefore, the width W_{LH} of the locking head 30 is smaller than width of the width W_{OP} of the opening part 15 to enable the locking head 30 to be brought through the opening part 15 and into the interior part 16 of the fastening groove 14. Furthermore, the height H_{LH} of the locking head 30 is smaller than the depth D_{IP} of the interior part 16 to enable the locking head 30 to be rotated within the interior part 16 such that at least one locking edge 38 of the locking head 30 may be brought into locking engagement with at least one of the sidewalls 17 in the interior part 16. Furthermore, the width W_{IP} of the interior part 16 is at least smaller than the length of the diagonal of the first and second surfaces 32, 33, but preferably smaller than the length L_{LH} of the locking head 30 such that at least one locking edge 38 of the locking head 30 may be brought into locking engagement with at least one of the sidewalls 17 in the interior part 16.

It can also be noted that a longitudinal direction A of the locking head 30 is arranged at an angle to the longitudinal direction B of the plate element 25 where the angle is between 0° and 90° as indicated in figure 4. The exact angle will depend on the design of the attachment system 10, but the angle is generally chosen so that the position of at least one locking edge 38 of each of the locking elements 30 are close to engaging respective sidewalls 17 of the interior part 16 of the fastening grooves 14 when the fastening members 22 are in their correct or desired positions.

In practice, when the locking head 30 of a locking element 29 of a locking device 24 is used to attach an attachment member 20 to an attachment structure 12, a fastening member 22 is connected to the attachment means 28 of the plate element 25 and the attachment member 20, the locking head 30 is brought into the interior part 16 of the fastening groove 14 and the fastening member 28 is tensioned, typically by reducing the length of the fastening member 28. This results in a rotational motion of the plate element 25 and thereby the locking head 30 which will result in that at least one of the locking edges 38 of the locking head 30 will be brought into locking engagement with at least one of the sidewalls 17 in the interior part 16 of the fastening groove when the length of the fastening member 28 has been sufficiently reduced.

Referring now to figures 6-7, an attachment system 10 according to the present invention is shown where the attachment member 20 is in the form of an attachment plate 40 that is attached to the attachment structure 12 with locking devices 24 and fastening members 22.

The attachment plate 40 can be divided into a first attachment portion 41, a second attachment portion 47 and a midportion 53 as indicated in the figures. The first attachment portion 41 comprises an upper locking device 43 and a lower locking device 44. The upper and lower locking devices 43, 44 are the same and have the same design as the locking device 25 described in detail above. The locking heads 30 of the upper locking device 43 and the lower locking device 44 respectively, are shown with dotted lines arranged in the same fastening groove 14. A fastening member 22 in form of a first turnbuckle 57 is attached to the attachment means 28 of the plate elements 25 of the upper and lower locking devices 43, 44 respectively, for example a bolt hole as suggested above, with a bolt 59 and a nut 60. Both plate elements 25 are therefore rotatable relative to the first turnbuckle 57.

The first turnbuckle 57 is provided with first adjustment element 58 that can be used to lengthen or shorten the turnbuckle 57 depending on which direction the first adjustment element 58 is rotated. To attach the attachment member 20 to the attachment structure 12,the turnbuckle 57 is shortened, whereby the second end portions 27 of the plate elements 25 are moved towards each other and one or both of two diametrically opposite locking edges 38 of the locking head 30 are brought into locking engagement with the respective sidewalls 17 of the interior part of the fastening groove 14. To facilitate a locking engagement of the locking edge 38 with a sidewall 17 in the interior part 16, the first end portions 26 of the two plate elements 25 may be prevented from moving towards each other, i.e. sliding in the fastening groove 14, by providing a distance element (not shown) between the two plate elements 25.

Similarly, the second attachment portion 47 comprises an upper locking device 49 and a lower locking device 50. The upper and lower locking devices 49, 50 are the same and have the same design as the locking device 25 described in detail above. The locking heads 30 of the upper locking device 49 and the lower locking device 50 respectively, are shown with dotted lines arranged in the same fastening groove 14. A fastening member 22 in form of a second turnbuckle 62 is attached to the attachment means 28 of the plate elements 25 of the upper and lower locking devices 49, 50 respectively, for example a bolt hole as suggested above, with a bolt 64 and a nut 65. Both plate elements 25 are therefore rotatable relative to the second turnbuckle 62.

The second turnbuckle 62 is provided with second adjustment element 63 that can be used to lengthen or shorten the turnbuckle 62 depending on which direction the second adjustment element 63 is rotated. When attaching the attachment member 20 to the attachment structure 12, the second turnbuckle 62 is shortened, whereby the second end portions 27 of the plate elements 25 are moved towards each other and one or both of two diametrically opposite locking edges 38 of the locking head 30 are brought into locking engagement with the respective sidewalls 17 of the interior part of the fastening groove 14. To facilitate a locking engagement of the locking edge 38 with a sidewall 17 in the interior part 16, the first end portions 26 of the two plate elements 25 may be prevented from moving towards each other, i.e. sliding in the fastening groove 14, by providing a distance element (not shown) between the two plate elements 25.

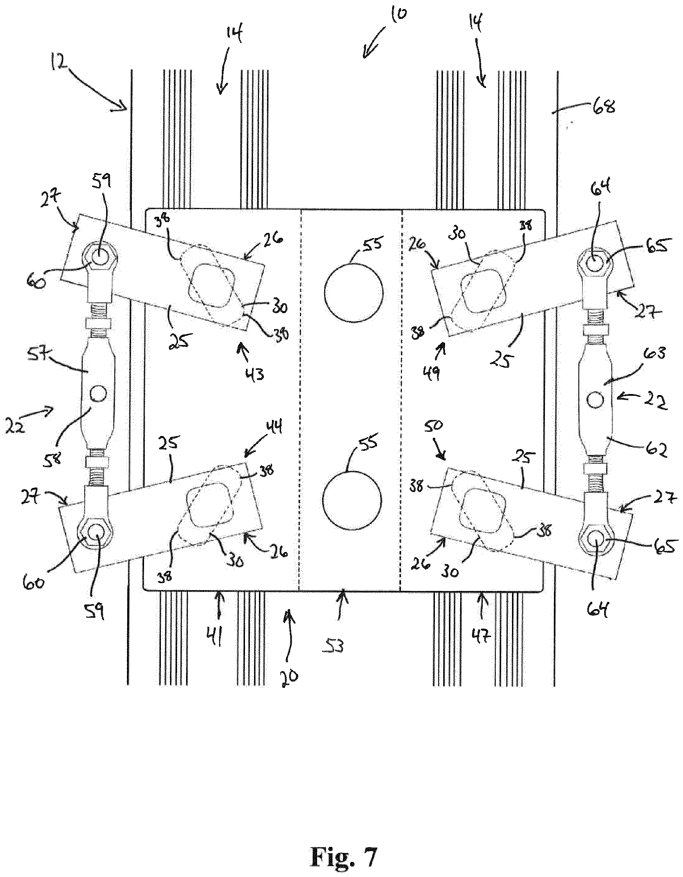

The midportion 53 of the attachment plate 40 is formed with a midportion groove 54 having a canal-like shape. The midportion 53 is provided with at least one attachment device 55 as shown in figure 7. The at least one attachment device 55 may be in the form of a hole through the attachment plate 40, in which case the midportion preferably is provided with at least two attachment devices 55. With two holes 55 provided in the canal-shaped midportion 53 of the attachment plate 40, a stay, a wire or any similar device may by attached to the attachment plate 40. It should be noted to even though the at least one attachment means 55 is shown as a hole in figure 7, a person skilled in the art could easily include one or more other types of the attachment devices 55 on the midportion 53 in order to attach a device to the attachment plate 40 and thereby to the attachment structure 12.

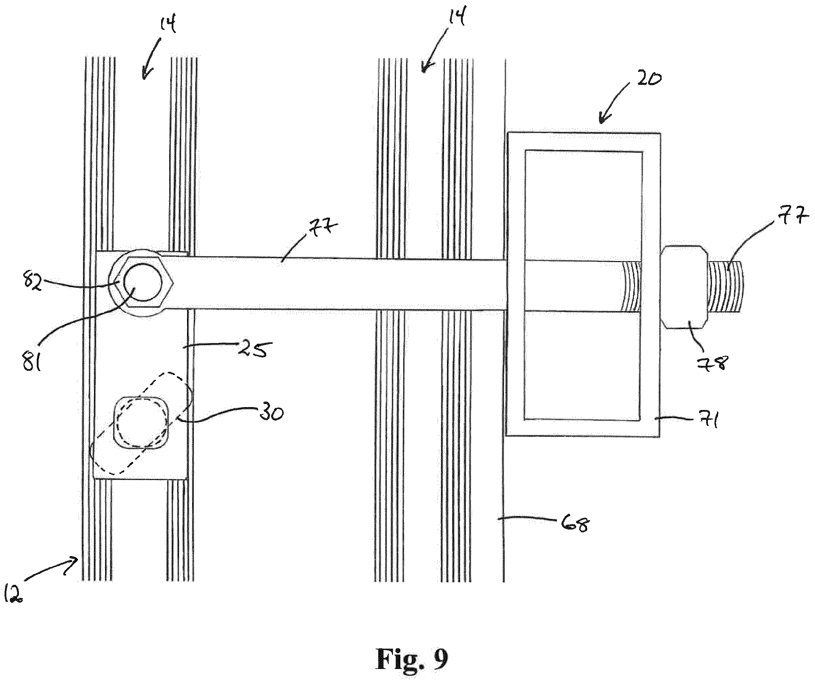

In figures 8 and 9 there is shown an attachment member 22 in form of a cross arm 71 that is attached to an attachment structure 12 in the form of pole 68. The pole is preferably, but not necessarily, the same or similar to the attachment structure shown in figures 6-7.

The pole 68 is provided with a plurality of fastening grooves, where pairs of two fastening grooves 14 are arranged opposite each other around the circumference of the pole 68. Two fastening members 22 in the form of a first bolt element 77 and a second bolt element 84 are arranged in a first fastening member opening 77 and a second fastening member opening 86 respectively. A first bolt element nut 78 and a second bolt element nut 85 are screwed on threaded portions of the first bolt element 77 and the second bolt element respectively.

In the other end of the first and second bolt elements 77, 84 they are attached to respective plate elements 25 with a first bolt 81 and first nut 82 and a second bolt 89 and second nut 90 respectively. The plate elements 25 comprises, as described in detail above, locking elements 29 that are provided with locking heads 30 that are arranged two fastening grooves 14 arranged on opposite sides of the pole 68.

The cross arm 71 is resting against the pole 68 and when the first bolt element nut 78 and the second bolt element nut 85 are turned in a direction that will create tension in the first bolt element 77 and the second bolt element 84, i.e. shorten the distance between the attachment means 28 of the plate elements 25 and the cross arm 71, the plate elements 25 will be rotated which means that the locking heads will also be rotated and at least one locking edge 38 of the two locking heads 30 will be brought into locking engagement with a sidewall 17 of the interior part 16 of the two fastening grooves 14 respectively. The locking system of the attachment system 10 for attaching the cross arm 71 to the pole 68 therefore works in a corresponding manner as the locking system of the attachment system 10 for locking the attachment plate 40 to the pole 68 as shown in figures 6-7. Tension is created in the fastening members 22 by changing the their lengths. The increased tension seeks results in an increased force acting on the plate elements 25 which in turn will seek to rotate the plate elements 25 and consequently the locking heads 30 of the locking elements 29. At least one locking edge 38 of the locking heads 30 will thereby be forced into a locking engagement with a sidewall 17 of the interior part 16 of the fastening groove 14, i.e. the at least one locking edge 38 will be forced into the sidewall and thereby a locking engagement.

It should be noted that even though the enclosed figures show embodiments of the present invention how various devices, i.e. a cross bar, a stay etc., may be attached to a pole, it should be understood that attachment system 10 may be used in many other technical fields for attachment of an attachment member 20 to an attachment structure 12 as long as the attachment structure 12 can be provided with one or more fastening grooves 14 and the fastening members 22 connecting a locking device 24 and the attachment member 20, can be arranged so that they rotates the locking devices 24 and thereby bring the locking heads into locking engagement with the fastening grooves 14. For example, it would be possible to arrange fastening grooves 14 in or on a substantially flat surface of an attachment structure 12, for example a wall of a building, and thereby repeatedly, detachably attach an attachment member 20, such as a work platform, to the flat surface of the wall at a desired position.

The invention has now been explained with reference to a non-limiting example. A person skilled in the art will, however, appreciate that modifications and changes may be made to this embodiment which will be within the scope of the invention as defined in the following claims.

## Claims

1. A locking device (24, 43, 44, 49, 50) for attachment of an attachment member (20) to an attachment structure (12), the attachment structure (12) comprising at least one fastening groove (14, 59, 60), wherein the locking device (24, 43, 44, 49, 50) comprises a plate element (25) that is provided with an attachment means (28) for attachment of a fastening member (22, 57, 62, 77, 84) to the plate element (25), the locking device (24, 43, 44, 49, 50) further comprising a locking element (29) that is secured to the plate element (25), the locking element (29) comprising a locking head (30) that comprises at least one locking edge (38) that is capable of going into locking engagement with the at least one fastening groove (14, 69, 70) when the locking head (30) is arranged in the at least one fastening groove (14, 69, 70) and the fastening member (22, 57, 62, 77, 84) is connected to the attachment member (20) and is tensioned.

2. Locking device according to claim 1,
wherein the locking head (30) of the locking element (29) has a rectangular shape in a cross section taken in a plane that is parallel to the plate element (25).

3. Locking device according to claim 1 or 2,
wherein the locking head (30) of the locking element (29) comprises four locking edges (38).

4. Locking device according to one of the claims 1-3,
wherein the locking element (29) is shaped with a neck part (31) and the locking head (30) where the neck part (31) is secured to the plate element (25).

5. Locking device according to one of the claims 1-4,
wherein a longitudinal direction A of the locking head (30) is arranged at an angle to the longitudinal direction B of the plate element (25) that is between 0° and 90°.

6. Locking device according to one of the claims 1-5,
wherein the attachment means (28) for attachment of the fastening member (22, 57, 62, 77, 84) to the plate element (25) is a bolt hole.

7. An attachment system (10) comprising an attachment member (20), a fastening member (22, 57, 62, 77, 84) that is connected to the attachment member (20) and an attachment structure (12) that is provided with at least one fastening groove (14, 69, 70), wherein the attachment system (10) further comprises a locking device (24, 43, 44, 49, 50) according to any one of the claims 1-6 where the locking head (30) is arranged in the at least one fastening groove (14, 69, 70), and wherein the fastening member (22, 57, 62, 77, 84) is further connected to the locking device (24, 43, 44, 49, 50) and tensioned such that the locking device (24, 43, 44, 49, 50) is rotated and the at least one locking edge (38) is brought into locking engagement with the fastening groove (14, 69, 70).

8. Attachment system according to claim 7,
wherein the fastening groove (14, 69, 70) of the attachment structure (10) is generally T-shaped and comprises an interior part (16) and an opening part (15) that extends from the interior part (16) and opens into the surroundings of the attachment structure (10).

9. Attachment system according to claim 8,
wherein the interior part (16) of the fastening groove (14, 69, 70) comprises two side walls (17) and that the at least one locking edge (38) of the locking head (30) is brought into locking engagement with one of the two side walls (17).

10. Attachment system according to one of the claims 7-9,
wherein a length of the locking head (30) is longer than the a width of an interior part (17) of the fastening groove (14, 69, 70).

11. Attachment system according to one of the claims 7-10,
wherein a width of the locking head (30) is smaller than a width of the opening part (15) of the fastening groove (14, 69, 70).

12. Attachment system according to one of the claims 7-11,
wherein the attachment system (20) comprises an attachment plate (40) that comprises at least one attachment device (55) for attachment of an external element.

13. Attachment system according to one of the claims 7-11,
wherein the attachment member (22) comprises a cross arm (71) for attachment of at least one high voltage wire.

14. Use of a locking member according to any one of claims 1-6 for attachment of a stay and/or a wire and/or a bracing to one or more poles (67) or power pylon members.

15. Use of a locking member according to any one of claims 1-6 for attachment of a cross arm (71) to a pole (67) of a power pylon (68).
